(19) **Europäisches Patentamt**

**European Patent Office**

**Office européen des brevets**

(11) **EP 0 213 671 B2**

(12) **NEW EUROPEAN PATENT SPECIFICATION**

(45) Date of publication and mention
of the opposition decision:
**05.07.2000 Bulletin 2000/27**

(45) Mention of the grant of the patent:
**27.04.1994 Bulletin 1994/17**

(51) Int. Cl.$^7$: **C08G 67/02**

(21) Application number: **86201422.2**

(22) Date of filing: **15.08.1986**

(54) **New polymers of carbon monoxide and ethene**

Kohlenmonoxid- und Äthylenpolymerisate

Polymères d'oxyde de carbone et d'éthylène

(84) Designated Contracting States:
**AT BE CH DE FR GB IT LI NL SE**

(30) Priority: **29.08.1985 NL 8502372**

(43) Date of publication of application:
**11.03.1987 Bulletin 1987/11**

(73) Proprietor:
**SHELL INTERNATIONALE RESEARCH
MAATSCHAPPIJ B.V.
2596 HR Den Haag (NL)**

(72) Inventors:
• **van Broekhoven, Johannes Adrianus Maria
NL-1031 CM Amsterdam (NL)**
• **Drent, Eit
NL-1031 CM Amsterdam (NL)**

• **Klei, Ebel
NL-1031 CM Amsterdam (NL)**

(56) References cited:
EP-A- 0 121 965          DE-A- 2 716 308
FR-A- 2 223 305          GB-A- 603 481
GB-A- 1 409 994          US-A- 4 473 482

• **"Textbook of Polymer Science", F.W. Billmeyer,
2nd Edition, Wiley-Interscience, Chapter 7**
• **"The Polymer Handbook", Edited by J.
Brandrup, E.H. Immergut, Second Edition,
Wiley-Interscience, page V-14**
• **"Principles of Polymerization", G. Odian.
McGraw-Hill, 1970, Chapter 2, page 129**

Remarks:
The file contains technical information submitted
after the application was filed and not included in
this specification

**Description**

The invention relates to polymers of carbon monoxide, ethene and propene

Polymers of carbon monoxide and ethene have been known for many years. They are usually prepared by reacting the monomers in the presence of a catalyst. High molecular weight polymers of ethylene which contain small quantities of carbon monoxide can be prepare with the aid of Ziegler catalysts. Low molecular weight polymers of carbon monoxide with ethene and possibly other olefinically unsaturated hydrocarbons in which all monomer units occur distributed at random within the polymer can be prepared with the aid of radical catalysts such as peroxides. A special class of the polymers of carbon monoxide with ethene is formed by the high molecular weight linear polymers in which the monomer units occur in alternating order and which polymers therefore consist of units with the formula $-CO-(C_2H_4)-$. Such polymers can be prepared with a.o. phosphorus-, arsenic, antimony-, or cyanogen-containing compounds of palladium, cobalt or nickel as catalyst.

The high molecular weight linear alternating polymers of carbon monoxide with ethene have excellent mechanical properties, in particular very high strength, rigidity and impact-resistance. Despite the fact that they can easily be prepared from inexpensive starting materials, these polymers have not as yet found any practical use. This is due primarily to stability problems associated with the high melting point of these polymers of about 257 °C. The processing of these polymers, for example, injection-molding, should take place in a molten state, the material then being at a temperature of at least 25 °C above its melting point, i.e. at a temperature of above 280 °C. It has been found that at such high temperatures these polymers start to discolorate and to decompose. In addition, the processed polymers show a high degree of gelling.

Prompted by the thought that a reduction of the melting point of the polymers to enable them to be processed at a lower temperature might possibly avoid the above-mentioned problem, attempts have been made in the past to lower the melting point through chemical reactions. Examples of such chemical reactions are those in which part of the carbonyl groups present in the polymers are converted into furan-, pyrrole-, thio or thioketal groups. Although the above-mentioned methods can in a number of cases achieve a considerable reduction of the melting point of the polymers and thus lower the required processing temperature correspondingly, the thermal stability of the polymers is often reduced as a result of the chemical modification to such an extent that the previously mentioned problem occurs to practically the same extent, albeit now at a somewhat lower processing temperature.

It will be appreciated from the above that no solution has yet been found for the outlined problem and that there is still an urgent need for a way of lowering the melting point of the polymers which does not at the same time greatly reduce the thermal stability.

The Applicant has now found that it is possible to reduce the melting point of the aforesaid polymers of ethene and carbon monoxide to a value of between 150 and 245°C without series detriment to the thermal stability of the polymers by including in the monomer mixture to be polymerized a relatively small quantity of propene. If a suitable catalyst is employed enabling a high molecular weight linear alternating polymer consisting of units with the formula $-CO-(C_2H_4)-$ to be prepared from a monomer mixture of carbon monoxide and ethene, then, if propene is additionally included in the monomer mixture, a polymer will be formed containing units with the formula $-CO-(C_2H_4)-$ and with units $-CO-(C_3H_6)-$ distributed randomly over the polymer backbone. The structure of the CO polymers and that of the terpolymer only differs in that in the terpolymer case $-CO-(C_3H_6)-$units occur at random points in the polymer chain. The surprising result of this structural change is that the melting point is reduced without serious detriment to the thermal stability. The research revealed that the extent of the melting point reduction depends, amongst other things, on the value of the quotient m/n, where m represents the average number of units with the general formula $-CO-(C_3H_6)-$ and n represents the average number of units the formula $-CO-(C_2H_4)-$ in the polymer. This dependence means that if n changes, m must change proportionally in order to achieve the same melting point reduction, and that if n is constant, a larger or smaller melting point reduction will be observed as m increases or decreases.

The polymers of the invention are obtainable by polymerising the monomers carbon monoxide, ethene and propene with the aid of a catalyst which is obtainable by reaction of a palladium, cobalt or nickel compound with an anion of a non-hydrohalogenic acid having a pKa of less than 2, and with a bidentate ligand having the general formula $R^1R^2-M-R-M-R^3R^4$, where M represents phosphorus, arsenic or antimony, $R^1$, $R^2$, $R^3$ and $R^4$ represent hydrocarbon groups, and R represents a bivalent organic bridge group containing at least two carbon atoms in the bridge. FR-A-2223305 suggests that when using a $HPd(CN)_3$ containing catalyst in the polymerisation of carbon monoxide, ethene and propene a polymer can be obtained having as the repeating unit $-CO-C_2H_4-CO-CH(CH_3)-CH_2-CO-$ or $-CO-C_2H_4-CO-CH_2-CH(CH_3)-CO-$ (i.e. either formula can be derived from the formula given).

To summarize, the polymers to which the invention relates can be defined as follows:

a) the polymers have a linear structure,
b) they consist of units $-CO-(C_2H_4)-$ and units $-CO-(C_3H_6)-$,
c) said units $-CO-(C_3H_6)-$ are distributed at random points in the polymer chains,

d) the ratio m/n lies between 0.023 and 0.235, wherein m and n are the average numbers of units -CO-(C_3H_6)- and -CO-(C_2H_4)-, respectively, and

e) the polymers are obtainable by polymerising carbon monoxide, ethene and propene with the aid of catalyst which is obtainable by reaction of a palladium cobalt or nickel compound with an anion of a non-hydrohalogenic acid having a pKa of less than 2, and with a bidentate ligand having the general formula $R^1R^2$-M-R-M-$R^3R^4$, where M represents phosphorus, arsenic or antimony, $R^1$, $R^2$, $R^3$ and $R^4$ represent hydrocarbon groups, and R represents a bivalent organic bridge group containing at least two carbon atoms in the bridge.

Polymers which satisfy criteria a-e are novel.

The present invention therefore relates to new polymers of carbon monoxide with ethene and propene which polymers satisfy the criteria mentioned above under a-e. The invention further relates to the preparation of these polymers.

The polymers according to the invention have a melting point of between 178 and 245 °C (corresponding to a m/n ratio of between 0.023 and 0.235). Preferred polymers have an m/n ratio of between 0.026 and 0.235, and in particular between 0.030 and 0.235.

The higher the molecular weight of the polymers according to the invention, the higher will be in general the intrinsic viscosity they exhibit. For the determination of the intrinsic viscosity of a polymer according to the invention, four solutions are first of all prepared by dissolving the polymer in four different concentrations at 100 °C in m-cresol. For each of these solutions, the viscosity is measured in a viscometer at 100 °C relative to m-cresol at 100 °C. If $T_o$ represents the outflow time of m-cresol and $T_p$ the outflow time of the polymer solution, the relative viscosity ($\eta_{rel}$) is obtained from $\eta_{rel} = T_p/T_o$. From $\eta_{rel}$ can be calculated the inherent viscosity ($\eta_{inh}$) according to the formula: $\eta_{inh} = (1n\ \eta_{rel})/c$ where c represents the concentration of the polymer in grams per 100 ml solution. By plotting graphically the $\eta_{inh}$ found for each of the four polymer solutions against the corresponding concentration (c) and then by extrapolating to c=0, the intrinsic viscosity ($\eta$) in dl/g is found. Instead of "intrinsic viscosity", this patent application will henceforth use the term recommended by the International Union of Pure and Applied Chemistry, viz. "Limiting Viscosity Number" (LVN). The polymers according to the invention generally have an LVN of between 0.2 and 5.0 dl/g. Preferred polymers have an LVN of between 0.3 and 4.5 dl/g and in particular an LVN of between 0.4 and 4.0 dl/g.

For the preparation of the polymers according to the invention, there is strong preference for the use of catalysts belonging to a class which will be described below. These catalysts, which have a much higher activity than those mentioned above, are obtained by the reaction of a palladium, cobalt or nickel compound with an anion of an acid with a pKa of less than 2, with the proviso that the acid is not a hydrohalogenic acid and with a bidentate ligand with the general $R^1R^2$-M-R-M-$R^3$-$R^4$, where M represents phosphorus, arsenic or antimony $R^1$, $R^2$, $R^3$ and $R^4$ represent hydrocarbon groups and R represents a bivalent organic bridge group containing at least two carbon atoms in the bridge. For the sake of brevity, these catalysts will be referred to in the rest of this patent application as "BDL" (bidentate ligand) catalysts.

For the preparation of the polymers according to the invention, use is preferably made of a BDL catalyst obtained from a palladium compound as Group VIII metal compound. Very suitable for this purpose are palladium salts of carboxylic acids and in particular palladium acetate. Examples of suitable acids with a pKa of less than 2 (measured in aqueous solution at 18 °C) are sulphonic acids sub as methanesulphonic acid, trifluoromethanesulphonic acid and para-toluenesulphonic acid and carboxylic acids such as trichloroacetic acid, difluoroacetic and trifluoroacetic acid. Para-toluenesulphonic acid and trifluoroacetic acid are preferred. For the preparation of the BDL catalysts, the anion of the acid with a pKa of less than 2 is preferably present in the mixture in an amount of 0.5 to 200 and more particular of 1.0 to 100 equivalents per g.at Group VIII metal. In the bidentate ligand M is preferably phosphorus. The hydrocarbon groups $R^1$, $R^2$, $R^3$ and $R^4$ preferably contain 6 to 14 carbon atoms. Particularly preferred are bidentate ligands in which the hydrocarbon groups $R^1$, $R^2$, $R^3$ and $R^4$ are phenyl groups or alkyl-substituted phenyl groups. The bivalent organic bridge group R preferably contains three carbon atoms in the bridge. Examples of suitable bidentate ligands are: 1,3-bis(di-p-tolylphosphino)propane, 1,3-bis(diphenylphosino)-propane, and 2-methyl,2-(diphenylphosphinomethyl)-1,3-bis(diphenylphosphino)propane. Preferably, one of the two last-mentioned bidentate ligands is employed. In the mixture from which the BDL catalysts are prepared the bidentate ligand is preferably present in an amount of 0.1-2 and in particular 0.9-1.1 moles per mol Group VIII metal compound.

The polymerization is preferably carried out in a liquid diluting agent. Lower alcohols such as methanol and ethanol are very suitable as liquid diluting agents. The quantity of BDL catalyst employed for the preparation of the polymers according to the invention can vary within wide limits. Preferably, $10^{-7}$ - $10^{-3}$ and more in particular $10^{-6}$ - $10^{-4}$ mol. of the BDL catalyst per mol of the olefinically unsaturated hydrocarbon to be polymerized is employed. The molar ratio of the olefinically unsaturated hydrocarbons relative to carbon monoxide in the mixture to be polymerized is preferably 10:1 - 1:5 and in particular 5:1 - 1:2. In the monomer mixture from which the polymers according to the invention are prepared the ratio between ethene and propene should be chosen such that a polymer is obtained with the desired low melting point. The carbon monoxide used in the preparation of the polymers according to the invention does not need to be pure, but may contain impurities such as hydrogen, carbon dioxide and nitrogen.

The preparation of the polymers with the aid of a BDL catalyst is preferably performed at a temperature of 20-150 °C and a pressure of 1-200 bar and in particular at a temperature of 30-100 °C and a pressure of 20-100 bar.

As mentioned above, the polymers according to the invention have excellent mechanical properties, in particular a very high strength, rigidity and impact-resistance. They can be processed by means of the usual techniques into films, sheets, plates, fibres, and molded objects. On account of their superior properties, the polymers according to the invention are suitable for many applications, such as in the automobile industry, for the manufacture of packaging material for foods and drinks, as construction and building material, for the manufacture of fibres, filaments, yarns, cables and for a variety of applications in the domestic sphere. In order to modify their characteristics or to strengthen them, the polymers according to the invention can be employed in combination with many sorts of materials.

Example 1 (for comparison)

A carbon monoxide/ethene copolymer was prepared as follows. 200 ml methanol was introduced into a mechanically stirred autoclave with a volume of 300 ml. After the contents of the autoclave had been brought to a temperature of 85 °C, a 1:1 carbon monoxide/ethene mixture was introduced into the autoclave until a pressure of 55 bar was reached. A catalyst solution was then introduced into the autoclave, consisting of:

6 ml methanol
0.01 mmol palladium acetate
0.01 mmol 1,3-bis(diphenylphosphino)propane, and
0.02 mmol trifluoroacetic acid.

The pressure was maintained at 55 bar by introducing under pressure a 1:1 carbon monoxide/ethene mixture. After 5 hours the polymerization was stopped by releasing the pressure. The polymer was filtered off, washed with ethanol and dried at 70 °C. 30 g copolymer with melting point of 257 °C and an LVN of 0.85 dl/g was obtained.

Example 2 (for comparison)

A carbon monoxide/ethene copolymer was prepared substantially in the same way as the copolymer in Example 1, except for the following differences:

a) instead of 1,3-bis(diphenylphosphino)propane, 2-methyl,2-(diphenylphoshinomethyl)-1,3-bis(diphenylphosphino)propane was used, and
b) instead of trifluoroacetic acid, p-toluenesulphonic acid was used.

25 g copolymer with a melting point of 257 °C and an LVN of 0.58 dl/g was obtained.

Example 3 (for comparison)

A carbon monoxide/ethene copolymer was prepared substantially in the same way as the copolymer in Example 2, except that in this case instead of a temperature of 85 °C, a temperature of 40 °C was employed. 3 g copolymer with a melting point of 257 °C and an LVN of 3.3. dl/g was obtained.

Example 4

A carbon monoxide/ethene/propylene terpolymer was prepared as follows. 200 ml methanol and 5 ml liquid propene was introduced into a mechanically stirred autoclave with a volume of 300 ml. After the contents of the autoclave had been brought to a temperature of 85 °C, a 1:1 carbon monoxide/ethene mixture was introduced into the autoclave until a pressure of 55 bar was reached. A catalyst solution was then introduced into the autoclave, consisting of:

6 ml methanol
0.01 mmol palladium acetate
0.01 mmol 1,3-bis(diphenylphosphino)propane, and
0.2 mmol trifluoroacetic acid.

The pressure was maintained at 55 bar by introducing under pressure a 1:1 carbon monoxide/ethene mixture. After 7 hours the polymerization was stopped by releasing the pressure. The polymer was filtered off, washed with methanol and dried at 70 °C. 21 g terpolymer with a melting point of 238 °C and an LVN of 0.55 dl/g was obtained.

Example 5

A carbon monoxide/ethene/propene terpolymer was prepared substantially in the same way as the terpolymer in Example 4, except for the following differences:

a) instead of 5 ml liquid propene, 20 ml of this compound was used, and
b) instead of the polymerization being stopped after 7 hours, it was stopped after 4 hours.

21 g terpolymer with a melting point of 220 °C and an LVN of 0.4 dl/g was obtained.

Example 6

A carbon monoxide/ethene/propene terpolymer was prepared substantially in the same way as the terpolymer in Example 4, except for the following differences:

a) instead of 5 ml of liquid propene, 50 ml of this compound was used,
b) instead of a mature of 85 °C, a temperature of 60 °C was used,
c) instead of a pressure of 55 bar, a pressure of 45 bar was used, and
d) instead of the polymerization being stopped 7 hours, it was stopped after 5 hours.

5 g terpolymer with a melting point of 214 °C and an LVN of 0.7 dl/g was obtained.

Example 7

A carbon monoxide/ethene/propene terpolymer was prepared substantially in the same way as the terpolymer in Example 4, except for the following differences:

a) instead of 5 ml of liquid propene, 45 ml of this compound was used,
b) instead of a temperature of 85 °C, a temperature of 45 °C was used,
c) instead of a pressure of 55 bar, a pressure of 45 bar was used,
d) for pressurizing the autoclave, instead of a carbon monoxide/ethylene mixtures with a mol ratio of 1:1 being applied, a similar mixture with a mol ratio of 3:1 was used, and
e) instead of the polymerization being stopped after 7 hours, it was stopped after 5 hours.

1 g terpolymer with a melting point of 178 °C and an LVN of 1.4 dl/g was obtained.

Of the polymers prepared according to Examples 1-7, only the terpolymers prepared according to Examples 4-7 are polymers according to the invention.

With the aid of $^{13}$C-NMR analysis it was established that the carbon monoxide/ethylene copolymers prepared according to Examples 1-3 had a linear alternating structure and that they consisted of units with the formula -$CO-(C_2H_4)$-. As can be seen from the examples, the three polymers which were prepared by different methods and had different LVN values all had a melting point of 257 °C.

It was also established with the aid of $^{13}$C-NMR analysis that the carbon monoxide/ethene/propene terpolymers prepared according to Examples 4-7 had a linear structure and that they considered of units with the formula -$CO-(C_2H_4)$- and units with the formula -$CO-(C_3H_6)$-, which units were distributed in a random manner in the terpolymers. On the basis of the data from the $^{13}$C-NMR analysis, the value of the m/n quotient was determined for each of the terpolymers prepared according to Examples 4-7. These values are given in the table. As can be seen, the higher the value of the m/n quotient, the lower the melting point of the terpolymer.

TABLE

|  | m/n | melting point °C |
|---|---|---|
| terpolymer according to Ex. 4 | 0.030 | 238 |
| terpolymer according to Ex. 5 | 0.073 | 220 |
| terpolymer according to Ex. 6 | 0.104 | 214 |

TABLE (continued)

|  | m/n | melting point °C |
|---|---|---|
| terpolymer according to Ex. 7 | 0.235 | 178 |

From the carbon monoxide/ethene copolymer with melting point 257 °C prepared according to Example 3 a plate was pressed for 15 minutes at 205 °C. This resulted in complete gelling (100%) of the copolymer and a very strong yellow discoloration.

From the carbon monoxide/ethane/propene terpolymer with melting point 214 °C prepared according to Example 6 a plate was also pressed for 15 minutes, but this time at 240 °C. In this case there was no gelling (less than 0.5%) and no discoloration.

The degree of gelling of the polymers is determined by taking up 100 mg polymer in 50 ml m-cresol at 100 °C and filtering the mixture over a 75 µm filter The degree of gelling is specified as the weight percentage of the polymer remaining on the filter.

**Claims**

1. Polymers of carbon monoxide with ethene and propene characterized in that

   a) the polymers have a linear structure,
   b) they consist of units -CO-$(C_2H_4)$- and units -CO-$(C_3H_6)$-,
   c) said units -CO-$(C_3H_6)$- are distributed at random points in the polymer chains,
   d) the ratio m/n lies between 0.023 and 0.235, wherein m and n are the average number of units -CO-$(C_3H_6)$- and -CO-$(C_2H_4)$-, respectively, and
   e) the polymers are obtainable by polymerising carbon monoxide, ethene and propene with the aid of catalyst which is obtainable by reaction of a palladium, cobalt or nickel compound with an anion of a non-hydrohalogenic acid having a pKa of less than 2, and with a bidentate ligand having the general formula $R^1R^2$-M-R-M-$R^3R^4$, where M represents phosphorus, arsenic or antimony, $R^1$, $R^2$, $R^3$ and $R^4$ represent hydrocarbon groups, and R represents a bivalent organic bridge group containing at least two carbon atoms in the bridge.

2. Polymers according to claim 1, characterized in that they have an m/n ratio of between 0.026 and 0.235.

3. Polymers according to claim 2, characterized in that they have an m/n ratio of between 0.030 and 0.235.

4. Polymers according to claim 1, 2 or 3, characterized in that they have an LVN of between 0.2 and 5.0 dl/g.

5. Polymers according to claim 4, characterized in that they have an LVN of between 0.3 and 4.5 dl/g.

6. Polymers according to claim 5, characterized in that they have an LVN of between 0.4 and 4.0 dl/g.

7. Process for the preparation of polymers according to any of claims 1-6, characterized in that the monomers are polymerized with the aid of catalyst which is obtainable by reaction of a palladium, cobalt or nickel compound with an anion of a non-hydrohalogenic acid having a pKa of less than 2, and with a bidentate ligand having the general formula $R^1R^2$-M-R-M-$R^3R^4$, where M represents phosphorus, arsenic or antimony, $R^1$, $R^2$, $R^3$ and $R^4$ represent hydrocarbon groups, and R represents a bivalent organic bridge group containing at least two carbon atoms in the bridge.

**Patentansprüche**

1. Polymere von Kohlenmonoxid mit Ethen und Propen, dadurch gekennzeichnet, daß

   a) die Polymere eine lineare Struktur haben,
   b) sie aus Einheiten -CO-$(C_2H_4)$- und Einheiten -CO-$(C_3H_6)$- bestehen,
   c) besagte Einheiten -CO-$(C_3H_6)$- an statistischen Punkten in den Polymerketten verteilt sind,
   d) das Verhältnis m/n zwischen 0,023 und 0,235 liegt, wobei m und n Durchschnittszahlen der Einheiten -CO-$(C_3H_6)$- und -CO-$(C_2H_4)$- sind, und
   e) die Polymere durch Polymerisieren von Kohlenmonoxid, Ethen und Propen mit Hilfe eines Katalysators erhältlich sind, der durch Umsetzung einer Palladium-, Kobalt- oder Nickelverbindung mit einem Anion einer Nichthalogenwasserstoffsäure mit einem pKa-Wert von weniger als 2 und mit einem zweizähnigen Liganden der allgemeinen Formel $R^1R^2$-M-R-M-$R^3R^4$ in der M Phosphor, Arsen oder Antimon darstellt, $R^1$, $R^2$, $R^3$ und $R^4$ Kohlenwasserstroffgruppen darstellen und R ein zweiwertiges organisches Brückenglied darstellt, das mindestens zwei Kohlenstoffatome in der Brücke enthält, erhältlich ist.

2. Polymere gemäß Anspruch 1, dadurch gekennzeichnet, daß sie ein m/n-Verhältnis zwischen 0,026 und 0,235 haben.

3. Polymere gemäß Anspruch 2, dadurch gekennzeichnet, daß sie ein m/n-Verhältnis zwischen 0,030 und 0,235 haben.

4. Polymere gemäß der Ansprüche 1, 2 oder 3, dadurch gekennzeichnet, daß sie eine Grenzviskosität zwischen 0,2 und 5,0 dl/g haben.

5. Polymere gemäß Anspruch 4, dadurch gekennzeichnet, daß sie eine Grenzviskosität zwischen 0,3 und 4,5 dl/g haben.

6. Polymere gemäß Anspruch 5, dadurch gekennzeichnet, daß sie eine Grenzviskosität zwischen 0,4 und 4,0 dl/g haben.

7. Verfahren zur Herstellung von Polymeren gemäß irgendeinem der Ansprüche 1 bis 6, dadurch gekennzeichnet, daß die Monomeren mit Hilfe eines Katalysators polymerisiert werden, der durch Umsetzung einer Palladium-, Kobalt- oder Nickelverbindung mit einem Anion eine Nichthalogenwasserstoffsäure mit einem pKa-Wert von weniger als 2 und mit einem zweizähnigen Liganden der allgemeinen Formel $R^1R^2$-M-R-M-$R^3R^4$, in der M Phosphor, Arsen oder Antimon darstellt, $R^1$, $R^2$, R3 und $R^4$ Kohlenwasserstoffgruppen darstellen und R ein zweiwertiges organisches Brückenglied darstellt, das mindestens zwei Kohlenstoffatome in der Brücke enthält, erhältlich ist.

**Revendications**

1. Des polymères d'oxyde de carbone avec l'éthylène et le propylène caractérisés en ce que

a) les polymères ont une structure linéaire,
b) ils sont constitués de mailles -CO-($C_2H_4$)- et de mailles -CO-($C_3H_6$)-,
c) les mailles -CO-($C_3H_6$)- sont distribuées à des points situés au hasard dans les chaînes des polymères,
d) le rapport m/n est compris entre 0,023 et 0,235, où m et n sont les nombres moyens de mailles -CO-($C_3H_6$)- et -CO-($C_2H_4$)-, respectivement, et
e) les polymères peuvent être obtenus en polymérisant du monoxyde de carbone, de l'éthylène et du propylène à l'aide d'un catalyseur qui peut être obtenu par réaction d'un composé du palladium, du cobalt ou du nickel avec un anion d'un acide non-halogénhydrique ayant un pKa de moins de 2, et avec un ligand bidenté ayant la formule générale $R^1R^2$-M-R-M-$R^3R^4$, où M représente le phosphore, l'arsenic ou l'antimoine, $R^1$, $R^2$, $R^3$ et $R^4$ représentent des groupes d'hydrocarbures et R représente un groupe organique bivalent formant pont contenant au moins deux atomes de carbone dans le pont.

2. Des polymères selon la revendication 1, caractérisés en ce qu'ils ont un rapport m/n compris entre 0,026 et 0,235.

3. Des polymères selon la revendication 2, caractérisés en ce qu'ils ont un rapport m/n compris entre 0,030 et 0,235.

4. Des polymères selon les revendications 1, 2 ou 3, caractérisés en ce qu'ils ont un LVN compris entre 0,2 et 5,0 dl/g.

5. Des polymères selon la revendication 4, caractérisés en ce qu'ils ont un LVN compris entre 0,3 et 4,5 dl/g.

6. Des polymères selon la revendication 5, caractérisés en ce qu'ils ont un LVN compris entre 0,4 et 4,0 dl/g.

7. Un procédé pour la préparation de polymères selon l'une quelconque des revendications 1-6, caractérisé en ce que les monomères sont polymérisés à l'aide d'un catalyseur qui peut être obtenu par réaction d'un composé du palladium, du cobalt ou du nickel avec un anion d'un acide non-halogénhydrique ayant un pKa de moins de 2, et avec un ligand bidenté ayant la formule générale $R^1R^2$-M-R-M-$R^3R^4$, ou M représente le phosphore, l'arsenic ou l'antimoine, $R^1$, $R^2$, $R^3$ et $R^4$ représentent des groupes d'hydrocarbures et R représente un groupe organique bivalent formant pont contenant au moins deux atomes de carbone dans le pont.